# DEMANDE DE BREVET EUROPEEN

(11) **EP 3 382 887 A1**
(43) Date de publication de la demande: **03.10.2018**
(21) Numéro de dépôt: 17163117.9
(22) Date de dépôt: 27.03.2017
(51) Int. Cl.: H02P 6/182, H02P 6/20

(54) **PROCEDE DE DEMARRAGE POUR UNE MACHINE SYNCHRONE, DISPOSITIF DE COMMANDE, MACHINE SYNCHRONE ET COMPRESSEUR ASSOCIES**

(71) Demandeur: Valeo Japan Co., Ltd., Saitama 360-0193 (JP)
(72) Inventeur: KHANCHOUL, Mohamed, 78322 Le Mesnil Saint-Denis Cedex (FR)
(74) Mandataire: Tran, Chi-Hai

(57) **Abrégé**

Procédé de démarrage d'une machine synchrone comprenant les étapes suivantes :
- injecter pendant une première durée un courant d'alimentation initial croissant avec le temps dans les enroulements du stator,
- dès qu'une force contre électromotrice (fcem) apparaît dans le stator, répéter pendant une pluralité de cycles de mesure N les étapes suivantes
∘ estimation de la position angulaire du rotor en utilisant un procédé de commande basé sur la détermination de la force contre électromotrice,
∘ calculer le déphasage entre la position angulaire estimée du rotor et la phase du courant injecté dans les enroulements du stator
∘ observer la valeur du déphasage,

- si la valeur du déphasage est constante au cours d'un cycle de mesure N et d'un cycle de mesure N+1, injecter un courant d'alimentation constant.

## Description

### Domaine technique

La présente invention concerne le domaine des moteurs électriques synchrones sans balais, dits par abréviation « machines synchrones » dans la présente demande, et, plus spécifiquement, un procédé de démarrage pour un moteur synchrone, un dispositif de commande pour ladite machine synchrone, une machine synchrone comprenant ledit dispositif de commande et compresseur comprenant ladite machine synchrone permettant de réduire l'intensité initiale injectée nécessaire au démarrage de la machine synchrone.

### Etat de la technique

De nos jours, il est connu d'utiliser des machines synchrones au sein d'un grand nombre de dispositifs tels que des machines à laver, des lecteurs de disques durs d'ordinateur, des dispositifs médicaux ou encore des compresseurs. De manière connue, une machine synchrone comprend deux parties de forme circulaire et concentriques ou superposées sur un axe passant par leur centre. Ainsi, la machine synchrone comprend une première partie fixe telle qu'un stator. Le stator comprend plusieurs bobinages ou enroulements ou phases d'enroulement dudit stator. Lorsqu'une source d'énergie électrique alimente successivement les phases d'enroulement du stator, un champ magnétique tournant est généré. La machine synchrone comprend une deuxième partie, telle qu'un rotor, apte à entrer en rotation autour de son centre. Le rotor comprend soit plusieurs électro aimants constitués d'enroulements qui, de même que les enroulements du stator, peuvent être alimentés par un courant électrique et engendrer ainsi un champ électromagnétique, soit des aimants permanents. Le stator et le rotor sont séparés par un entrefer. En présence du champ magnétique tournant généré par le stator et du champ magnétique du rotor, des forces électromagnétiques apparaissent à la périphérie du rotor. Elles créent un couple moteur qui entraîne le rotor en rotation. Deux enroulements successifs par rapport au sens de rotation du stator doivent être convenablement polarisés pour entraîner l'aimant du rotor situé entre eux. L'enroulement polarisé comme l'aimant repousse celui-ci tandis que l'enroulement suivant, polarisé à l'inverse de l'aimant, attire ledit aimant. Il est donc utile de connaître précisément la position angulaire du rotor.

De plus, dans une machine synchrone, la vitesse de rotation du rotor doit égaler la vitesse à laquelle le champ magnétique dans les enroulements statoriques semble tourner. La vitesse du champ tournant statorique doit être égale à la vitesse du champs tournant rotorique si le stator est pourvu de p triplets d'enroulements, la vitesse du champ tournant devient p fois celle du rotor. La vitesse du rotor est en fait la fréquence du courant électrique dans le stator, multipliée par 2π.

Le pilotage de la machine synchrone implique donc de contrôler en permanence la vitesse du rotor et de régler éventuellement l'amplitude du courant dans le stator.

Il est connu d'utiliser des capteurs de position afin de déterminer la position du rotor. Ces capteurs de position sont par exemple des capteurs à effet Hall fixés au rotor. Les capteurs à effet Hall sont adaptés pour fonctionner avec une cible magnétique afin de commuter le courant dans les phases d'enroulement du stator lors des inversions de champ magnétique. A partir de mesures successives de la position, on peut déduire la vitesse du rotor. Cependant, l'utilisation de tels capteurs de position est relativement onéreuse et complexe compte tenu de l'encombrement desdits capteurs de position au sein de la machine synchrone.

Par conséquent des solutions alternatives de mesure de la position et de la vitesse à partir de la force contre électromotrice (fcem), utilisant des dispositifs électroniques peu encombrants, faciles à intégrer à la machine synchrone, ont été développées. A un instant donné, la force contre électromotrice est classiquement mesurée dans l'enroulement statorique qui ne joue aucun rôle dans la production du couple moteur, où l'on a brièvement interrompu le courant.

Dans l'art antérieur, il est connu d'utiliser un procédé de commande d'une machine synchrone basé sur la mesure de la fcem, d'où l'on déduit une estimation de la vitesse du rotor et de sa position. Les solutions de mesure de la position à partir de la force contre électromotrice ont été développées en vue de leur application au régime permanent de fonctionnement. Ce procédé est appelé procédé de commande en régime permanent dans la suite de la présente demande.

Au démarrage, et plus généralement durant le régime transitoire, se pose le problème du couple moteur qui doit être suffisant pour entraîner le rotor. Or, comme on ne connait pas la charge, ou le coupe de démarrage à un instant donné, on ne connait pas le couple minimal nécessaire

Selon les solutions de l'état de l'art, on injecte une intensité initiale forte et de fait, excessive. Les démarrages répétés avec une intensité excessive ont pour inconvénients d'user prématurément les composants électroniques mais aussi les composants mécaniques. En effet, l'intensité excessive engendre une vitesse excessive qui risque d'entraîner le rotor trop loin, dans une position où les polarisations de l'enroulement précédent et de l'enroulement suivant du stator entraînent le rotor dans l'autre sens, d'où un effet de brusque « marche arrière ».

### Objet de l'invention

La présente invention se propose de résoudre au moins en partie les inconvénients de l'art antérieur.

La présente invention concerne un procédé de démarrage d'une machine synchrone applicable jusqu'à la fin du régime transitoire. Une étape essentielle de ce procédé consiste à appliquer le procédé de commande, conçu pour le régime permanent, au régime transitoire. Cela permet de modérer l'intensité de démarrage de la machine synchrone par rapport aux solutions de l'état de l'art.

Selon un premier mode de réalisation, l'invention concerne un procédé de démarrage d'une machine synchrone comprenant les étapes suivantes :
- injecter pendant une première durée un courant d'alimentation initial croissant avec le temps dans les enroulements du stator,
- dès qu'une force contre électromotrice (fcem) apparaît dans le stator, répéter pendant une pluralité de cycles de mesure N les étapes suivantes
   ∘ estimation de la position angulaire du rotor en utilisant un procédé de commande basé sur la détermination de la force contre électromotrice,
   ∘ calculer le déphasage entre la position angulaire estimée du rotor et la phase du courant injecté dans les enroulements du stator
   ∘ observer la valeur du déphasage,
   ∘ si la valeur du déphasage est constante au cours d'un cycle de mesure N et d'un cycle de mesure N+1, injecter un courant d'alimentation constant.
   ∘ Injecter un courant d'alimentation additionnel en fonction dudit couple ou de ladite charge estimée.

De manière préférée, le procédé de démarrage comprend en outre une étape de contrôle pour permettre un fonctionnement en régime permanent.

De manière préférée, l'étape d'injection du courant d'alimentation initial croissant comprend une étape d'augmentation d'amplitude du courant d'alimentation initial dans les enroulements du stator.

Selon un deuxième mode de réalisation, l'invention concerne un dispositif de commande pour une machine synchrone comprenant un stator associé à une première et une deuxième composante d'une intensité, et à une première et à une deuxième composante d'une tension appliquée audit stator, de sorte qu'une première et une deuxième composante d'une force contre électromotrice (fcem) et un champ électromagnétique tournant par rapport audit stator sont générés, la machine synchrone comprenant en outre un rotor de sorte que le champ électromagnétique tournant entraine le rotor en rotation selon une vitesse initiale déterminée comprenant un dispositif d'observation pour estimer la position angulaire du rotor.

De manière préférée, le dispositif de commande comprend un dispositif de contrôle de déphasage pour calculer et observer la valeur du déphasage entre la position angulaire du rotor et la phase du courant dans les enroulements du stator.

Selon un troisième mode de réalisation, l'invention concerne une machine synchrone comprenant le dispositif de commande mentionnée ci-dessus.

Selon un quatrième mode de réalisation, l'invention concerne un compresseur adapté pour un système de climatisation automobile comprenant une machine synchrone mentionnée ci-dessus.

### Brève description des dessins

L'invention, sa fonctionnalité, ses applications ainsi que ses avantages seront mieux appréhendés à la lecture de la présente description, faite en référence aux figures, dans lesquelles :
- la figure 1 montre une représentation schématique d'un système de commande mettant en oeuvre le procédé décrit et utilisé pour une machine synchrone à électro aimants, selon un mode de réalisation de l'invention ;
- la figure 2 montre un système de commande conforme au système de commande en régime permanent et mettant en oeuvre le procédé de commande en régime permanent, pour le démarrage et pour le contrôle en régime permanent ;
- la figure 3 montre l'écart angulaire entre la position angulaire du rotor et la phase du courant dans le stator pour une charge importante de la machine synchrone ;
- la figure 4 montre l'écart angulaire entre la position angulaire du rotor et la phase du courant dans le stator pour une charge moins importante de la machine synchrone ;
- la figure 5 montre, selon un mode de réalisation de l'invention les variations de l'intensité et de la vitesse initiale du rotor avec des procédés de démarrage selon l'état de l'art ;
- La figure 6 montre les variations de l'intensité et de la vitesse initiale du rotor avec un procédé de démarrage selon l'invention.

### Description détaillée des modes de réalisation

La description ci-après a pour but d'exposer l'invention de manière suffisamment claire et complète, notamment à l'aide d'exemples, mais ne doit pas être considérée comme limitant l'étendue de la protection aux modes de réalisation particuliers et aux exemples présentés.

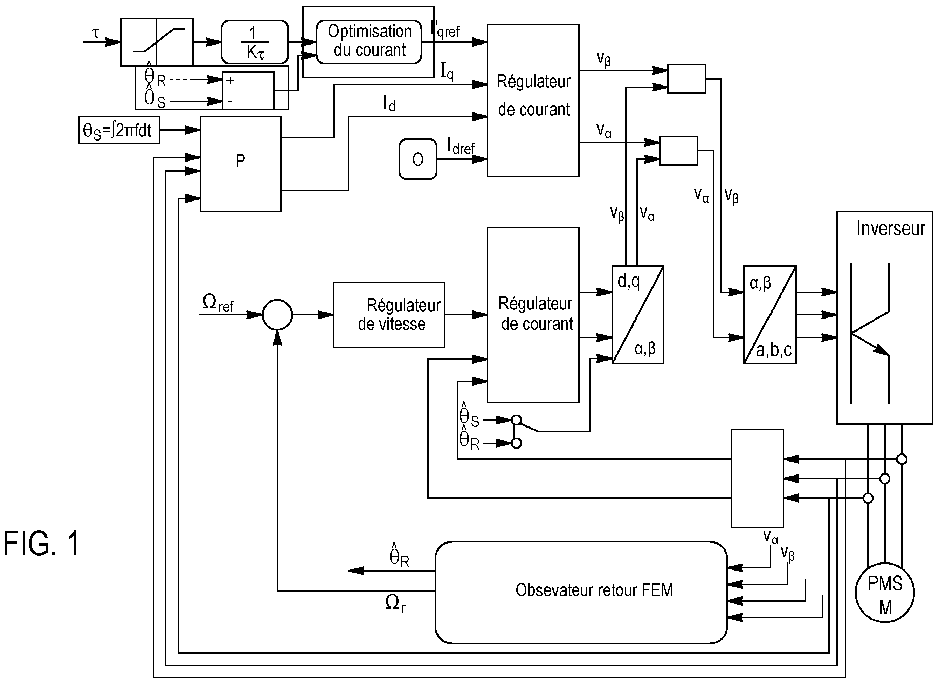

La figure 1 montre un système de commande pour démarrer une machine synchrone selon l'invention et la commander selon le procédé de commande en régime permanent.

Selon un mode de réalisation préféré, ladite machine synchrone est une machine synchrone triphasée comprenant un stator (non montré) pourvu de trois enroulements statoriques et un rotor (non montré) pourvu d'une pluralité d'électro aimants. Le rotor et le stator sont séparés par un entrefer (non montré).

Cette architecture de machine synchrone correspond à une réalisation préférée et permet de fixer les idées mais ne doit pas s'entendre comme une restriction de la portée de l'invention qui s'applique aussi bien à des rotors à aimants permanents ; à des stators ayant plusieurs triplets d'enroulements ; à une disposition en étoile ou en triangle des enroulements du stator ; à un rotor et un stator décalés etc.

Le système de commande montré à la figure 1 comprend essentiellement un dispositif d'optimisation du courant relié à un système de commande conforme au système de commande en régime permanent, selon un mode de réalisation préféré de l'invention.

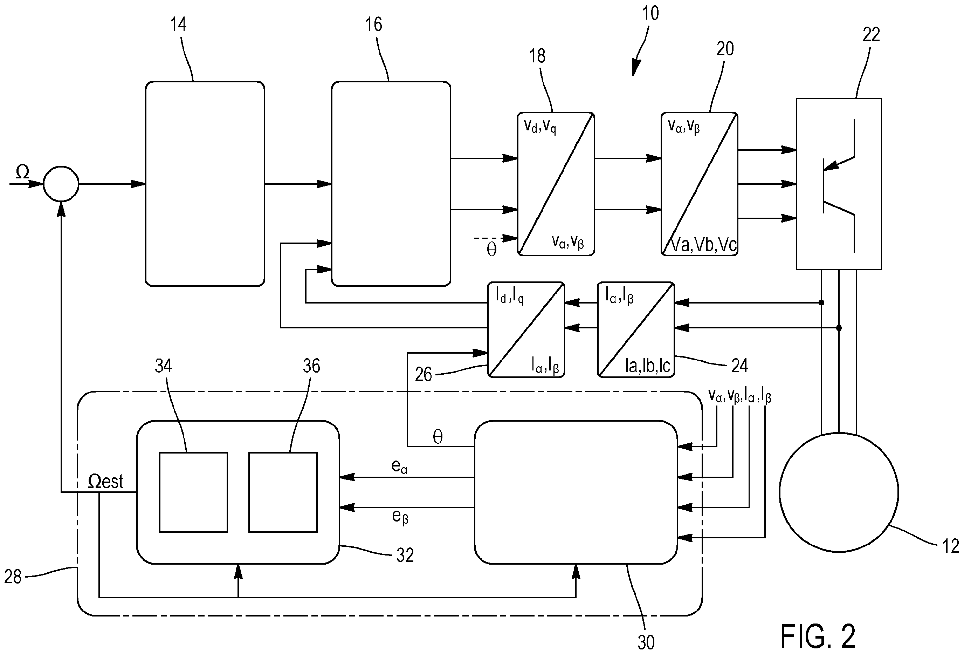

La figure 2 montre un système de commande 10 pour contrôler une machine synchrone 12 en régime permanent. La dite machine est conforme à la description ci-dessus et le dit système est, selon un mode de réalisation préféré de l'invention, conforme au système de commande en régime permanent.

Selon le mode de fonctionnement connu d'une machine synchrone triphasée, le rotor est entrainé en rotation selon une vitesse initiale déterminée sous l'influence du champ magnétique tournant généré par le stator.

Dans la présente invention, un tour du rotor correspond à plusieurs cycles de mesure de différentes données physiques de la machine synchrone. Un cycle de mesure correspond à une durée de l'ordre de 100 µs (microseconde).

Le système de commande 10 comprend un dispositif de contrôle de vitesse 14 pour recevoir et transmettre des informations relatives à une vitesse seuil ou vitesse initiale déterminée de rotation du rotor de la machine synchrone 12.

Le système de commande 10 comprend également un dispositif de contrôle d'intensité 16 pour recevoir les informations en provenance du dispositif de contrôle de vitesse 14 et produire les tensions à appliquer aux trois enroulements statoriques. Le système de commande 10 comprend un premier dispositif de conversion 18 pour convertir un ensemble de valeurs de la tension V relatives aux composantes directe et en quadrature Vd, Vq dans un repère tournant (d, q) en un ensemble de valeurs relatives aux composantes correspondantes Vα, Vβ dans un repère fixe (α, β).

Le système de commande 10 comprend un deuxième dispositif de conversion 20 pour convertir l'ensemble des valeurs des composantes Vα, Vβ en un ensemble de valeurs relatives aux composantes correspondantes Va, Vb, Vc de la tension V.

Le système de commande 10 comprend un dispositif électronique de puissance 22, tel qu'un onduleur, capable de recevoir, en entrée, l'ensemble des valeurs des composantes Va, Vb, Vc de la tension V afin de fournir, en sortie, un ensemble de valeurs relatives au composantes correspondantes de l'intensité Ia, Ib, Ic.

Le système de commande 10 comprend également un troisième dispositif de mesure et de conversion 24 pour mesurer l'ensemble de valeurs relatives aux composantes Ia, Ib, Ic de l'intensité et convertir lesdites valeurs pour obtenir un ensemble de valeurs relatives aux composantes correspondantes Iα, Iβ dans le repère fixe (α, β).

Le système de commande 10 comprend aussi un quatrième dispositif de conversion 26 pour convertir les valeurs des composantes Iα, Iβ en un ensemble de valeurs de composantes correspondantes Id, Iq dans le repère tournant (d, q).

Les valeurs de tension Vα, Vβ et d'intensité Iα, Iβ sont enregistrées dans une mémoire intégrée au système 10 (non représentée).

Le système de commande 10 comprend également un dispositif de commande 28 qui reçoit en entrée les valeurs Vα, Vβ, Iα, Iβ. Il calcule des valeurs estimées eα, eβ de la première et de la deuxième composante de la force contre électromotrice du stator pour un cycle de mesure N donné et les enregistre dans la mémoire du dispositif 10. A partir de ces valeurs et de celles de la force contre électromotrice pour le cycle de mesures N-1 (présentes en mémoire), il déduit des estimations de la position du rotor et de sa vitesse.

Le procédé de commande en régime permanent est donc un procédé itératif qui permet, en temps réel, de corriger la position du rotor pour un cycle de mesure N+1, en utilisant les données mesurées lors d'un cycle de mesure N et N-1. Le système de commande 10 permet de piloter la machine synchrone 12 en régime permanent selon le procédé de commande en régime permanent.

Le régime permanent se caractérise par trois conditions :
- la vitesse de rotation est la vitesse nominale, imposée par conception de la machine synchrone ou programmée en fonctionnement à l'aide d'un variateur ;
- la vitesse de rotation égale la vitesse du champ tournant (condition de synchronisme) ;
- l'intensité d'alimentation du stator a exactement la valeur voulue pour produire un couple moteur qui équilibre la charge de la machine.

Au démarrage, on commence par injecter une intensité croissante dans le stator. Il n'est pas possible de mesurer une force contre électromotrice dès le démarrage car il n'y a pas de force contre électromotrice en l'absence de courant.

Puis dès qu'une force contre électromotrice apparaît, on mesure le déphasage Δθ entre la position angulaire du rotor et la phase du courant dans le stator. La position angulaire du rotor est connue grâce au procédé de commande en régime permanent; c'est une donnée de sortie du dispositif de commande 28. La phase du courant dans le stator est une caractéristique du courant d'excitation du stator ; c'est une donnée d'entrée du système de commande 10.

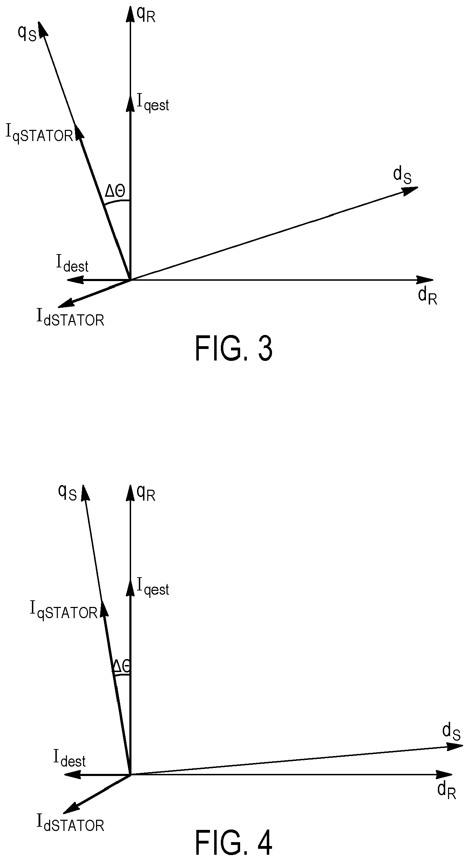

Le déphasage Δθ s'interprète en effet comme une mesure de l'intensité d'excitation. Plus Δθ est faible, plus le courant d'excitation est faible comme illustré sur les figures 3 et 4.

Lorsque Δθ atteint sa valeur minimum, le courant d'excitation est également au minimum et l'on a atteint le régime permanent.

On réduit donc le courant d'excitation et au cycle de mesure suivant, on mesure de nouveau Δθ et l'on observe si Δθ diminue et ainsi de suite lors des cycles de mesure suivants.

On cesse de réduire le courant d'excitation quand Δθ est constant c'est-à-dire que Δθ cesse de diminuer.

On a alors atteint le régime permanent et l'on peut continuer à utiliser le procédé de commande en régime permanent pour contrôler la machine synchrone.

Selon un premier effet technique du procédé selon l'invention, l'intensité initiale injectée peut être limitée pour éviter une usure prématurée des composants électroniques et mécaniques de la machine synchrone. Selon un deuxième effet technique du procédé selon l'invention, le passage du régime transitoire au régime permanent s'effectue de manière progressive sans effet brusque et donc avec une production réduite de bruit.

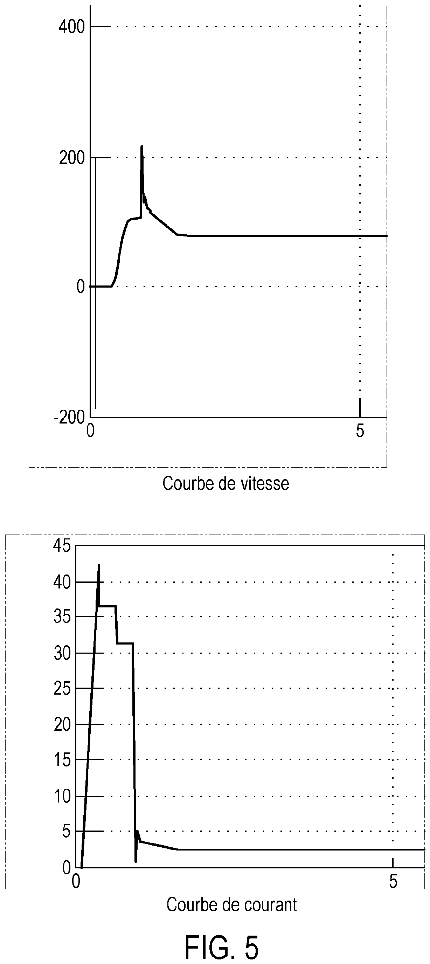

La figure 5 montre la variation de l'intensité et de la vitesse au démarrage pour une charge donnée, lorsqu'on utilise un procédé de démarrage selon l'état de l'art. On constate un dépassement de la vitesse nominale jusqu'à 200 rad/s et un dépassement de l'intensité nominale à plus de 40 A.

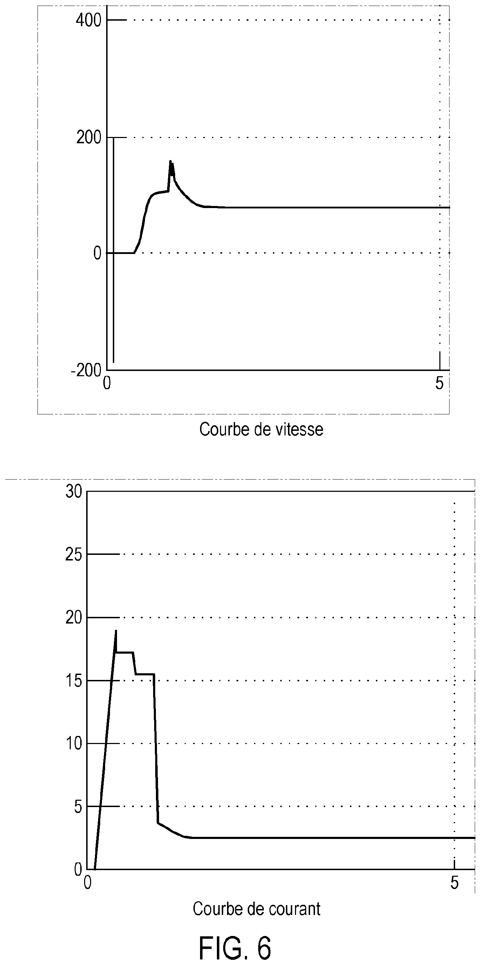

La figure 6 montre la variation de l'intensité et de la vitesse au démarrage pour la même charge donnée, lorsqu'on utilise le procédé de l'invention. On constate que le dépassement de la vitesse nominale est limité à 150 rad/s et le dépassement de l'intensité nominale à 20 A.

Selon une application spécifique, la machine synchrone 12 peut être un compresseur d'un véhicule automobile hybride, électrique ou thermique. Le compresseur est adapté pour fonctionner au sein d'un système de climatisation d'un véhicule automobile, afin, notamment de refroidir l'habitacle dudit véhicule automobile. Le compresseur assure également les fonctions de dégivrage des parebrise du véhicule automobile et de refroidissement de la batterie électrique.

Plus généralement, comme les algorithmes sont de faible complexité, notamment au sein du dispositif de commande 28, le procédé de commande selon l'invention peut être utilisé de manière avantageuse pour des systèmes embarqués.

Par ailleurs, le système de commande selon l'invention ne nécessite pas de matériel spécifique. Ainsi, le coût de fabrication d'un tel système de commande est relativement réduit.

## Revendications

1. Procédé de démarrage d'une machine synchrone comprenant les étapes suivantes :
- injecter pendant une première durée un courant d'alimentation initial croissant avec le temps dans les enroulements du stator,
- dès qu'une force contre électromotrice (fcem) apparaît dans le stator, répéter pendant une pluralité de cycles de mesure N les étapes suivantes
o estimation de la position angulaire du rotor en utilisant un procédé de commande basé sur la détermination de la force contre électromotrice,
o calculer le déphasage entre la position angulaire estimée du rotor et la phase du courant injecté dans les enroulements du stator
∘ observer la valeur du déphasage,
- si la valeur du déphasage est constante au cours d'un cycle de mesure N et d'un cycle de mesure N+1, injecter un courant d'alimentation constant;
- Estimation du couple ou la charge en fonction du déphasage ;
- Injection d'un courant d'alimentation additionnel en fonction du couple ou de la charge estimée.

2. Procédé de démarrage selon la revendication 1, comprenant en outre une étape de contrôle pour permettre un fonctionnement en régime permanent.

3. Procédé de démarrage selon la revendication 1 ou 2, l'étape d'injection du courant d'alimentation initial croissant comprenant une augmentation d'une amplitude du courant d'alimentation initial dans les enroulements du stator.

4. Dispositif de commande pour une machine synchrone comprenant un stator associé à une première et une deuxième composante d'une intensité, et à une première et à une deuxième composante d'une tension appliquée audit stator, de sorte qu'une première et une deuxième composante d'une force contre électromotrice (fcem) et un champ électromagnétique tournant par rapport audit stator sont générés, la machine synchrone comprenant en outre un rotor de sorte que le champ électromagnétique tournant entraine le rotor en rotation selon une vitesse initiale déterminée comprenant un dispositif d'observation pour estimer la position angulaire du rotor.

5. Dispositif de commande selon la revendication 4, comprenant un dispositif de contrôle de déphasage pour calculer et observer la valeur du déphasage entre la position angulaire du rotor et la phase du courant dans les enroulements du stator.

6. Machine synchrone comprenant le dispositif de commande selon l'une des revendications 4 ou 5.

7. Compresseur adapté pour un système de climatisation automobile comprenant une machine synchrone selon la revendication 6.
